Europäisches Patentamt

(19) European Patent Office

Office européen des brevets

(11) Publication number: 0 148 955
A1

# (12) EUROPEAN PATENT APPLICATION

published in accordance with Art. 158(3) EPC

(21) Application number: 84902607.5

(22) Date of filing: 28.06.84

Data of the international application taken as a basis:

(86) International application number:
PCT/JP84/00333

(87) International publication number:
WO85/00443 (31.01.85 85/03)

(51) Int. Cl.⁴: G 05 B 19/405
B 23 Q 35/12, G 06 F 3/02

(30) Priority: 30.06.83 JP 118650/83

(43) Date of publication of application:
24.07.85 Bulletin 85/30

(84) Designated Contracting States:
DE FR GB

(71) Applicant: FANUC LTD
3580, Shibokusa Aza-Komanba Oshino-mura
Minamitsuru-gun Yamanashi 401-05(JP)

(72) Inventor: YAMAZAKI, Etuo
566-93, Shimoongata-cho
Hachioji-shi Tokyo 192-01(JP)

(72) Inventor: MATSUURA, Hitoshi 412-7, Midori-cho
Hachioji-shi Keio-Yamada-Mansion 1-406
Tokyo 193(JP)

(72) Inventor: SAKURAI, Hiroshi
4-36-7, Toyoda Hino-shi
Kabutoyama-Heights 202 Tokyo 191(JP)

(74) Representative: Billington, Lawrence Emlyn et al,
HASELTINE LAKE & CO Hazlitt House 28 Southampton
Buildings Chancery Lane
London WC2A 1AT(GB)

(54) METHOD OF INPUTTING PROFILING PARAMETER.

(57) A method which makes it possible to speedily and reliably input parameters concerning the direction of a profiling feed shaft, a pick-feed method, and the direction of an approach shaft, etc. Identification symbols identifying a plurality of profiling parameters are displayed on a displayed device. When an operator positions a cursor at the portion of the display device where a certain identification symbol is displayed and then presses a parameter input request key, a series of parameter format data corresponding to the identification symbol is displayed on a blank portion of the display device. When the operator presses one of the format data selection keys arranged so as to correspond to the displayed format data, one format data item corresponding to the selected key is stored in a data memory as a profiling parameter value and, at the same time, is displayed on the displayed device so that it can be verified by the operator.

./...

FIG. 2

```
┌──────────────────────────────────────────────────────┐
│                                                        │
│ Reference Displacement      0l       0.800 mm          │
│                                                        │
│ Tracer Feed Axis Direction 02         − X              │
│                                                        │
│ Tracer Feed Rate            03                         │
│                                                        │
│ Pick Feed Method            04         .               │
│                                                        │
│                                                        │
│                                                        │
│                                                        │
│           .                                            │
│                                                        │
│        ┌─────┬─────┬─────┬─────┬─────┬─────┐           │
│        │ +X  │ −X  │ +Y  │ −Y  │     │     │           │
│        └─────┴─────┴─────┴─────┴─────┴─────┘           │
│                                                        │
└──────────────────────────────────────────────────────┘

┌────────┐ ┌────────┐ ┌────────┐ ┌────────┐ ┌────────┐ ┌────────┐
│   F l  │ │   F2   │ │   F3   │ │   F4   │ │   F5   │ │   F6   │
└────────┘ └────────┘ └────────┘ └────────┘ └────────┘ └────────┘
```

# TRACING PARAMETER ENTERING METHOD

## TECHNICAL FIELD

The present invention relates to a method for entering a tracing parameter into tracer control equipment.

## BACKGROUND ART

In general, tracer control equipment is arranged so as to be capable of selecting the value of each of such parameters as a tracer feed asix direction, a pick feed method, an approach axis direction and so forth within the range of a plurality of discrete values, referred to as format data of parameter, permitting the operator to perform initialization and modification of the parameter value by selecting optimum format data for each of a number of parameters.

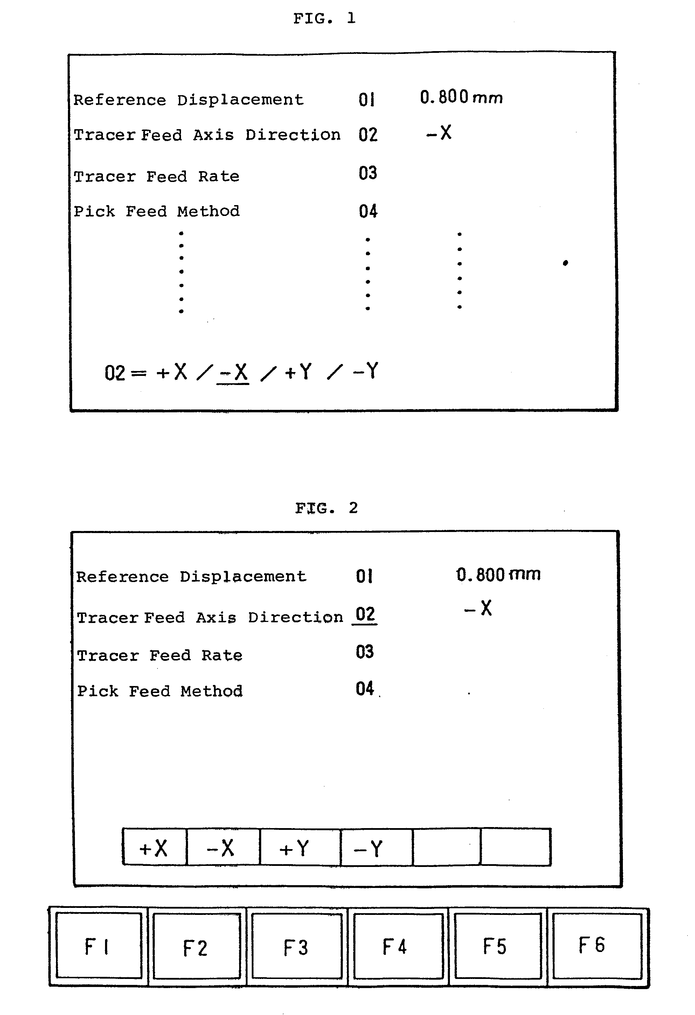

A description will be given, with reference to Fig. 1, of a prior art example of a method for entering parameters of this kind. At first, the operator actuates a display to provide thereon displays of names of tracing parameters, such as a reference displacement, a tracer feed rate, etc., and code numbers of the parameters, such as 01, 02, etc., and keys the code number (for example, 02) of the tracing parameter desired to enter into an unfilled space of the display screen (in the illustrated example at the lower portion of the display screen) while observing the displays being provided. By this, format data (such as +X/-X/+Y/-Y) of this tracing parameter is displayed. Next, when the operator presses an input key after moving a cursor to the position of the format data that is desired to enter, the
format data at the cursor is input as a tracing parameter
value into a data memory, and at the same time the input
pracing parameter value is displayed on the display at
a predetermined position corresponding to the code number
of this pracing parameter value.

With the example described above, however, much
time is needed for keying the code number and for moving
the cursor, presenting the problem that fast and positive
entering of parameters is impossible.

An object of the present invention is to provide
a method for fast and positive entering of tracing parameters.

To attain the above objective, the present invention
is constituted so that identification codes of a plurality
of tracing parameters are displayed on the display; by
pressing a tracing parameter input request key, the identification code of the tracing parameer at the cursor is read
out of a character memory to identify the tracing parameter
related to by the input request; the format data of the
identified tracing parameter related to the input request
are displayed in an unfilled space of the display; and
by a actuating a selected one of format data select keys
arranged corresponding to the array of the displayed format
data, the format data corresponding to the position of the
actuated format data select key is written as a tracing
parameter value into a data memory and, at the same time,
it is displayed at a predetermined display position corre-

0148955

sponding to the cursor position.

Fig. 2 shows the display screen of the display explanatory of the constitution of the present invention described above.

At first, by turning ON the power source of the display, or by pressing a display command key (not shown) after turning ON the power source of the display, the name (such as the refererence displacement) of each of a plurality of tracing parameters and its identification code such as an identification number (for example, 01) are displayed on the display.

Next, the cursor is moved to the position of the identification code of the tracing parameter (hereinafter referred to simply as "parameter") that is desired to enter, and then a parameter input request key (not shown) is pressed.

The display reads out the identification code of the parameter from the address in the character memory that corresponds to the cursor position, identifies the parameter related to the input request and displays the format data (+X/-X/+Y/-Y) of the parameter in the unfilled space of the display screen.

Seeing the format data, the operator presses a desired one of format data select keys (Fl, F2, F3, ... ) arranged corresponding to the array of the format data. For example, when it is desired to enter the format data -X displayed second from left, the key F2 second from left is pressed.

Upon detecting the depression of the key F2, the display loads the format data -X as an input parameter value into the data memory and, at the same time, displays the input data value at a predetermined display position (on the right of the identification number 02) corresponding to the cursor position.

BRIEF DESCRIPTION OF THE DRAWINGS

Figs. 1 and 2 are disgrams respectively explanatory of a conventional method and an example of this invention method, using the display screen of a display;

Fig. 3 is a block diagram illustrating the arrangement of an embodiment of the present invnetion; and

Fig. 4 is a flowchart showing an example of processing by a CPU.

BEST MODE FOR CARRYING OUT THE INVENTION

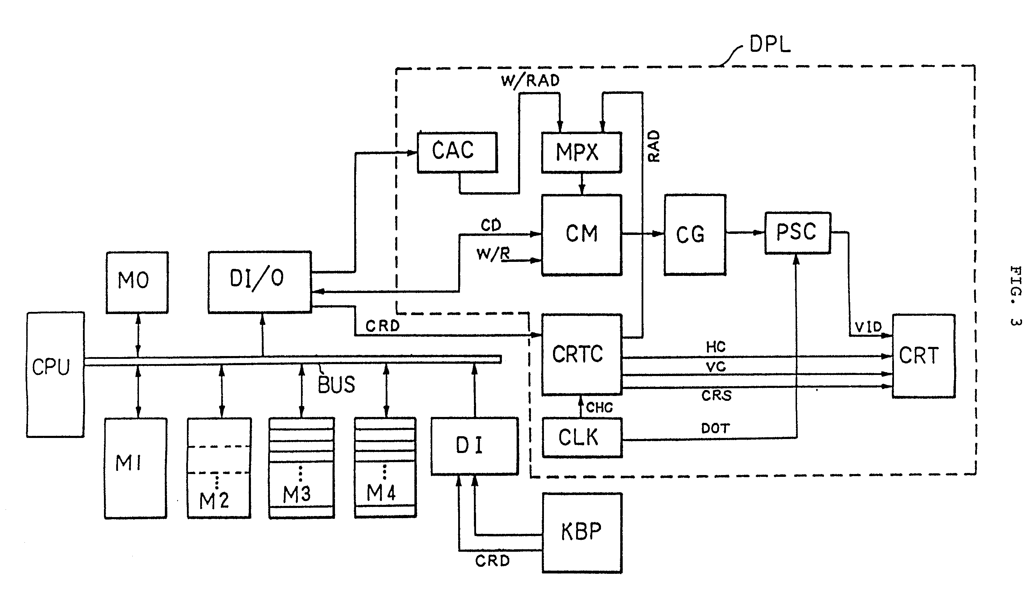

Fig. 3 is a block diagram illustrating the arrangement of a dispaly embodying the present invention.

Reference character CPU indicates a processor, MO a program memory, M1 a work memory, M2 a display data memory, M3 a format data memory, M4 a data memory, DI/O a digital input/output device, DI a digital input device, KBP a keyboard panel and DPL a display unit.

In the display unit DPL, reference character CRT designates a cathode ray tube, CM a character memory for storing character data of one picture frame, CAC a character address counter, CLK a clock oscillator, CRTC a control circuit for the cathode ray tube CRT, MPX a multiplexer, CG a character generator, PSC a parallel-serial converter, CD character data, W/R write/read select data, CRD cursor position data, CHC a character clock, DOT a dot clock, W/RAD write/read address data, RAD read address data, HC a horizontal deflection signal, VC a vertical deflection signal, CRS a cursor display signal and VID a video signal.

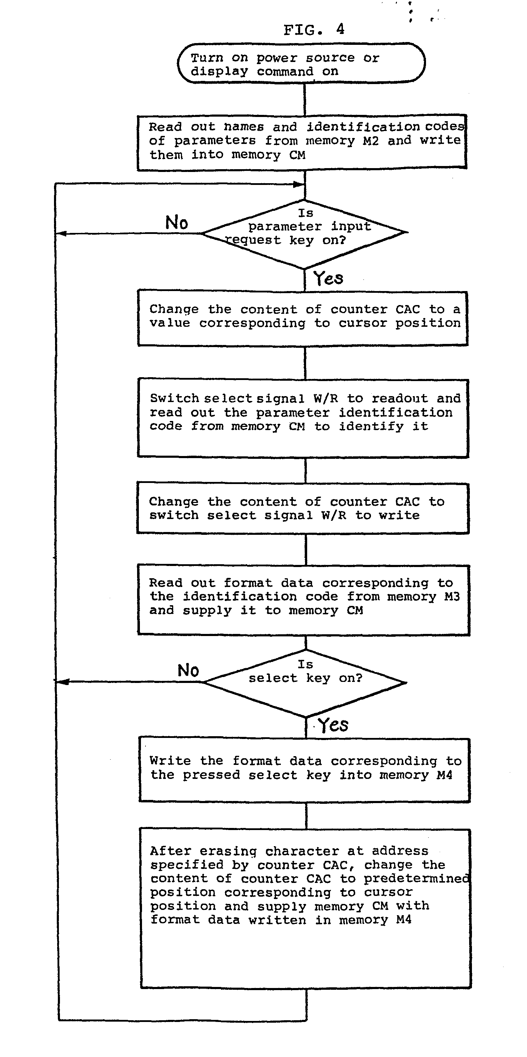

Fig. 4 is a flowchart showing an example of processing by the CPU.

Upon turning ON of the power source of the display, or upon receiving a display command from the keyboard panel KBP after turning ON of the power source, the CPU reads out, by executing a control program stored in the program memory MO, display data stored in the display data memory M2 and writes the name (such as the reference displacement) and the identification number (for example, 01) or like identification code of each of a plurality of parameters into the character memory CM. The contents of the character memory CM are displayed on the cathode ray tube CRT via the character generator CG and the parallel-serial converter PSC under control of the control circuit CRTC for the cathode ray tube CRT, as shown in Fig. 2.

The operator moves via the keyboard panel KBP the cursor to the position of the identification code of the parameter desired to enter and then presses the parameter input request key. The cursor position data CRD and the

0148955

input request from the keyboard panel KBP are received by the CPU via the digital input device DI and a bus BUS.

Upon receipt of the input request, the CPU sets the content of the character address counter CAC to a value corresponding to the cursor position and, at the same time, switches the write/read select data W/R for the character memory CM to readout, by which the identification code of the parameter is read out via the digital input/output device DI/O from the address in the character memory CM corresponding to the cursor position, identifying the parameter related to the input request. Having identified the parameter, the CPU applies via the bus and the digital output device DO to the character memory CM the format data (+X/-X/+Y/-Y) on the abovesaid parameter stored in the format data memory M3 and changes the content of the character address counter CAC to a predetermined unfilled space of the display screen and, further, switches the write/read data W/R for the character memory CM to write. In this way, the newly written format data are displayed in the predetermined blank space on the cathode ray tube CRT under control of the control circuit CRTC for the cathode ray tube CRT.

Seeing the format data thus displayed, the operator selectively presses the format data select keys (F, F2, F3, ... in Fig. 2) arranged corresponding to the array of the format data. For instance, when it is desired to enter the format data -X second from left, the select key F2 second from left is pressed.

Having received the selectively switched position data, the CPU writes the corresponding format data into the data memory M4 and, after erasing a character of an address specified by the character address counter CAC, changes the content of the character address counter CAC to a predetermined position corresponding to the cursor. position and supplies the character memory CM with the format data written in the data memory M4. By this, format data displayed in the blank space on the display screen is erased and instead the selected format data is displayed as the input parameter value at the predetermined position corresponding to the cursor position, for example, on the right of the identification number, as shown in Fig. 2.

While in the above embodiment the parameter identification numbers are used as parameter identification codes, it is also possible to omit them and to use the names of parameters as their identification codes.

Further, the above embodiment has been described in connection with the case where only identification codes of parameters are displayed at the start of the display operation, it is evident that such an arrangement can also be employed in whic a previously set parameter value, or a typical parameter value of the highest frequency of use among the parameters is read out of the data memory M4 and displayed in addition to the parameter identification codes and those of the parameters which have to be modified are rewritten.

The present invention, by virtue of such a constitution as described above, saves the operations of keying parameter identification codes and moving the cursor back and forth unlike the prior art example, and hence it offers a fast and positive parameter entering method.

0148955

C L A I M

A tracing parameter entering method, characterized in that:

identification codes of a plurality of tracing parameters are displayed on a display;

by pressing a tracing parameter input request key, the identification code of the tracing parameter at a cursor is read out of a character memory to identify the tracing parameter related to the input request;

format data of the identified tracing parameter related to the input request is displayed in an unfilled space of the display; and

by actuating a desired one of format data select keys arranged corresponding to the array of the format data being displayed, the format data corresponding to the actuated format data select key is written as a tracing parameter value and, at the same time, it is displayed at a predetermined display position corresponding to the cursor position.

0148955

## FIG. 1

| Reference Displacement | 0l | 0.800 mm |
|---|---|---|
| Tracer Feed Axis Direction | 02 | −X |
| Tracer Feed Rate | 03 | |
| Pick Feed Method | 04 | |

$$02 = +X \diagup \underline{-X} \diagup +Y \diagup -Y$$

## FIG. 2

| Reference Displacement | 0l | 0.800 mm |
|---|---|---|
| Tracer Feed Axis Direction | 02 | −X |
| Tracer Feed Rate | 03 | |
| Pick Feed Method | 04 | |

| +X | −X | +Y | −Y | | |
|---|---|---|---|---|---|

| F l | F 2 | F 3 | F 4 | F 5 | F 6 |
|---|---|---|---|---|---|

FIG. 3

FIG. 4

0148955

```
╭─────────────────────────────╮
│ Turn on power source or     │
│ display command on          │
╰─────────────────────────────╯
              │
┌─────────────────────────────┐
│ Read out names and identification codes │
│ of parameters from memory M2 and write │
│ them into memory CM         │
└─────────────────────────────┘
              │
         ◇ Is
        parameter input      No ──┐
        request key on? ◇          │
              │ Yes                 │
┌─────────────────────────────┐     │
│ Change the content of counter CAC to a │
│ value corresponding to cursor position │
└─────────────────────────────┘     │
              │                      │
┌─────────────────────────────┐     │
│ Switch select signal W/R to readout and │
│ read out the parameter identification │
│ code from memory CM to identify it │
└─────────────────────────────┘     │
              │                      │
┌─────────────────────────────┐     │
│ Change the content of counter CAC to │
│ switch select signal W/R to write │
└─────────────────────────────┘     │
              │                      │
┌─────────────────────────────┐     │
│ Read out format data corresponding to │
│ the identification code from memory M3 │
│ and supply it to memory CM  │
└─────────────────────────────┘     │
              │                      │
         ◇ Is
        select key on? ◇      No ──┤
              │ Yes                 │
┌─────────────────────────────┐     │
│ Write the format data corresponding to │
│ the pressed select key into memory M4 │
└─────────────────────────────┘     │
              │                      │
┌─────────────────────────────┐     │
│ After erasing character at address │
│ specified by counter CAC, change the │
│ content of counter CAC to predetermined │
│ position corresponding to cursor │
│ position and supply memory CM with │
│ format data written in memory M4 │
└─────────────────────────────┘     │
              │                      │
              └──────────────────────┘
```

# INTERNATIONAL SEARCH REPORT

**0148955**

International Application No. PCT/JP84/00333

## I. CLASSIFICATION OF SUBJECT MATTER (if several classification symbols apply, indicate all) ⁵

According to International Patent Classification (IPC) or to both National Classification and IPC

Int. Cl³ G05B 19/405, B23Q 35/12, G06F 3/02

## II. FIELDS SEARCHED

### Minimum Documentation Searched ⁴

| Classification System | Classification Symbols |
|---|---|
| IPC | G05B 19/403, 19/405, G06F 3/02 |

### Documentation Searched other than Minimum Documentation to the Extent that such Documents are Included in the Fields Searched ⁵

| | |
|---|---|
| Jitsuyo Shinan Koho | 1956 – 1984 |
| Kokai Jitsuyo Shinan Koho | 1971 – 1984 |

## III. DOCUMENTS CONSIDERED TO BE RELEVANT ¹⁴

| Category* | Citation of Document, ¹⁶ with indication, where appropriate, of the relevant passages ¹⁷ | Relevant to Claim No ¹⁸ |
|---|---|---|
| Y | JP, A, 56-88527 (Yokogawa Electric Works, Ltd.) 18 July 1981 (18. 07. 81) | |
| Y | JP, A, 57-169813 (Mitsubishi Electric Corp.) 19 October 1982 (19. 10. 82) & WO, A, 82/3704 & EP, A1, 76328 | |
| Y | JP, A, 49-23539 (Hitachi, Ltd.) 2 March 1974 (02. 03. 74) | |

* Special categories of cited documents: ¹⁵

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search ² | Date of Mailing of this International Search Report ² |
|---|---|
| July 12, 1984 (12. 07. 84) | July 23, 1984 (23. 07. 84) |

| International Searching Authority ¹ | Signature of Authorized Officer ²⁰ |
|---|---|
| Japanese Patent Office | |

Form PCT/ISA/210 (second sheet) (October 1981)